Europäisches Patentamt

(19) European Patent Office

Office européen des brevets

(11) Veröffentlichungsnummer: **0 048 387**
**B1**

(12) # EUROPÄISCHE PATENTSCHRIFT

(45) Veröffentlichungstag der Patentschrift:
**17.04.85**

(51) Int. Cl.⁴: **H 01 Q 1/12,** F 16 B 2/20

(21) Anmeldenummer: **81107075.4**

(22) Anmeldetag: **09.09.81**

(54) **Vorrichtung zur Befestigung eines Reflektor- und/oder Direktorstabes an einem Antennentragprofil.**

(30) Priorität: **23.09.80 DE 3035818**

(43) Veröffentlichungstag der Anmeldung:
**31.03.82 Patentblatt 82/13**

(45) Bekanntmachung des Hinweises auf die Patenterteilung:
**17.04.85 Patentblatt 85/16**

(84) Benannte Vertragsstaaten:
**AT BE CH DE FR GB IT LI LU NL SE**

(56) Entgegenhaltungen:
**DD - A - 107 174**
**DE - B - 1 303 879**
**DE - B - 2 065 276**
**FR - A - 2 108 769**
**FR - A - 2 124 091**
**GB - A - 1 343 651**

(73) Patentinhaber: **Schmidt, Reinhard, Heidacker 52,**
**D-2000 Hamburg (DE)**

(72) Erfinder: **Schmidt, Reinhard, Heidacker 52,**
**D-2000 Hamburg (DE)**

(74) Vertreter: **UEXKÜLL & STOLBERG Patentanwälte,**
**Beselerstrasse 4, D-2000 Hamburg 52 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zur Befestigung eines Reflektor- und/oder Direktorstabes an einem Antennentragprofil in Form eines Vierkantstabes für Rundfunk- und/oder Fernsehantennen, für Funkantennen für den Amateurfunk sowie Yagi-Antennen.

Die Befestigung von Reflektor- und/oder Direktorstäben an Antennenprofilen in Form eines Vierkantstabes wird beispielsweise so vorgenommen, daß man den Vierkantstab durchbohrt, um den Reflektor- und/oder Direktorstab hindurchstecken zu können, und dann erfolgt die Festlegung mittels Hilfseinrichtungen, etwa durch Bohrungen im Reflektor- und/oder Direktorstab hindurchgesteckte Splinte. Diese Befestigungsart hat den Nachteil, daß einerseits ein besonderer Bearbeitungsvorgang zur Herstellung der Bohrungen im Vierkantstab erforderlich ist und daß andererseits infolge dieser Bohrungen eine Herabsetzung der Festigkeit des Vierkantstabes erfolgt. Ferner ergibt sich ein erheblicher Montageaufwand, und die exakt einzuhaltende Lage von Reflektor- und/oder Direktorstab bezüglich des Antennentragprofils läßt sich nur sehr schwer herstellen.

Es ist auch bereits bekannt, den Reflektor- und/oder Direktorstab schwenkbar am Antennentragprofil zu befestigen, so daß diese Verbindung bereits in der Fabrik hergestellt werden kann. Am Montageort braucht der Reflektor- und/oder Direktorstab lediglich in die gewünschte Lage geklappt zu werden. Hierzu sind jedoch aufwendige und komplizierte Verbindungseinrichtungen erforderlich, und in den meisten Fällen muß für jeden sich zu einer Seite des Antennentragprofils erstreckenden Stababschnitt eine gesonderte Verbindung zum Antennentragprofil vorgesehen werden.

Es ist ferner bereits bekannt (DE-B-1 303 879), einen Reflektor- und/Direktorstab mittels einer U-förmigen Klammer an einem im Querschnitt rechteckförmigen Antennentragprofil zu befestigen. In den Schenkeln der durch Aufpressen eines Materialstreifens auf das Antennentragprofil hergestellten Klammer sind zwei Langlöcher für das Einschieben des Reflektor- und/oder Direktorstabes ausgebildet, der durch die äußeren Ränder dieser Langlöcher gegen das Antennentragprofil gedrückt wird. Da die Klammer durch Verformen eines Blechstreifens auf dem Antennentragprofil hergestellt wird, muß das verwendete Material verhältnismäßig leicht zu verformen sein, und es ist ein Spezialwerkzeug erforderlich, mit dem das Aufpressen auf das Antennentragprofil erfolgen kann. Ist die Klammer und mit ihr der Reflektor- und/oder Direktorstab einmal auf dem Antennentragprofil befestigt, so ist eine Verlagerung von Klammer von Stab ohne plastische Verformung der Klammer nicht mehr möglich, so daß die erneute Befestigung wiederum nur mittels des Spezialwerkzeuges stattfinden kann.

Es ist auch bereits eine im wesentlichen U-förmige Klammer aus federelastischem Material bekannt (GB-A-1 343 651), bei der die freien Enden der Schenkel nach innen und zur Basis gebogen sind. Diese Klammer dient zur Verbindung von zwei Teilen, die zu diesem Zweck von der Klammer umgriffen werden. Die bekannte Klammer eignet sich jedoch nicht zur Befestigung eines Reflektor- und/oder Direktorstabes an einem Antennenprofil.

Es ist Aufgabe der Erfindung, eine einfach aufgebaute Vorrichtung zur Befestigung eines Reflektor- und/oder Direktorstabes an einem Antennentragprofil aus einem Vierkantstab zu schaffen, mit der sich der Reflektor- und/oder Direktorstab am Montageort ohne Verwendung von Spezialwerkzeugen sehr einfach und in einer genau festgelegten Lage am Antennentragprofil anbringen läßt, wobei sich der Reflektor- und/oder Direktorstab auch zu beiden Seiten des Antennentragprofils erstrecken kann.

Zur Lösung dieser Aufgabe wird eine Vorrichtung verwendet, die aus einer mit an den freien Enden ihrer Schenkel nach innen gebogenen Abschnitten sowie mit benachbart zu ihrer Basis im wesentlichen fluchtenden Bohrungen zur Aufnahme des Reflektor- und/oder Direktorstabes versehenen U-förmigen Klammer besteht, die sich dadurch auszeichnet, daß die Klammer aus federelastischem Material besteht und daß die an den freien Enden der Schenkel nach innen gebogenen Abschnitte zur Basis der Klammer gebogen sind, so daß sie sich bei auf das Antennentragprofil aufgesetzter Klammer in oder an diesem verkrallen, wobei die Basis der Klammern einen sich im wesentlichen parallel zu den Schenkeln erstreckenden, nach innen in Richtung auf die gebogenen Abschnitte verformten Teilbereich aufweist bzw. derart verformt ist und sich dieser verformte Teilbereich bei unverformter Klammer zumindest in einen Teil desjenigen Bereiches erstreckt, der durch eine geradlinige Verbindung der beiden Bohrungen gebildet ist, ohne sich bei um eine vorgegebene Strecke zusammengedrückten Schenkeln in diesen Bereich zu erstrecken.

Die erfindungsgemäße Vorrichtung besteht somit aus einer besonders ausgebildeten, vorgefertigten Klammer, die sehr einfach von Hand auf das Antennentragprofil aufgedrückt werden kann und dort infolge des Verkrallens oder gebogenen Abschnitte der Schenkel festgehalten wird, während der Reflektor- und/oder Direktorstab sich durch die Bohrungen in den Schenkeln erstreckt. Soll in eine derartige Klammer ein Reflektor- und/oder Direktorstab eingesetzt werden, so läßt er sich nur durch eine der Bohrungen einführen, während das Erreichen der gegenüberliegenden Bohrung wegen des verformten Teilbereiches der Basis der Klammer nicht möglich ist. Wenn dann jedoch die Schenkel um eine vorgegebene Strecke zusammengedrückt werden, verlagert sich die Basis derart bezüglich der Bohrungen, daß ihr verformter Teilbereich nicht mehr im Bereich der geradlinigen Verbindung der beiden Bohrungen liegt, also der Reflektor- und/oder Direktorstab durch die Bohrungen gesteckt und genau in die gewünschte Lage gebracht werden kann. Bei Freigabe der Schenkel der Klammer drückt der verformte Teilbereich der Basis auf den Reflektor- und/oder Direktorstab und preßt diesen dadurch gegen die unteren Ränder der Bohrungen, wodurch der Stab sicher in seiner Lage positioniert bleibt. Da auch beim nachfolgenden Aufsetzen der Klammer auf das Antennentragprofil kein Zusammendrücken, sondern ein zusätzliches Aufweiten der Schenkel der Klammer stattfindet, wird der Reflektor- und/oder Direktorstab auch während und nach der Montage der Klammer auf dem Antennentragprofil in der gewünschten Lage festgehalten.

Um eine möglichst feste und sichere Verkrallung der Klammer auf dem Antennentragprofil zu erzielen, kann der Abstand zwischen den freien Enden der gebogenen Abschnitte und den diesen am nächsten liegenden Rändern der Bohrungen geringfügig kleiner sein, als die Höhe des Antennentragprofils, so daß bei Montage der Klammer auf dem Antennentragprofil mit eingesetztem Reflektor- und/oder Direktorstab die gebogenen Abschnitte der Klammer elastisch verformt werden und sich dadurch fest gegen bzw. in das Material des Antennentragprofils pressen.

Die Klammer besteht vorzugsweise aus Federstahl, insbesondere aus rostfreiem Stahl, beispielsweise X 12 CrNi 17 7, also einem Stahl mit einem Gehalt von 0,15% Kohlenstoff oder weniger, 1% Silicium oder weniger, 2% Mangan oder weniger, 17% Chrom und 7,5% Nickel. Ein derartiger Stahl wird zunächst in die gewünschte Form gebracht und erhält danach durch eine Glühbehandlung bei etwa 350°C seine Federeigenschaften.

Die Erfindung wird im folgenden anhand der ein Ausführungsbeispiel zeigenden Figuren näher erläutert.

Fig. 1 zeigt einen Schnitt durch eine Klammer mit eingesetztem Reflektor- und/oder Direktorstab.

Fig. 2 zeigt die Klammer aus Fig. 1 in perspektivischer Darstellung.

Fig. 3 zeigt im Schnitt die auf das Tragprofil aufgesetzte Klammer mit dem von ihr gehaltenen Reflektor- und/oder Direktorstab.

Fig. 4 zeigt die auf dem Antennentragprofil befestigte Klammer einschließlich des Reflektor- und/oder Direktorstabes in perspektivischer Darstellung.

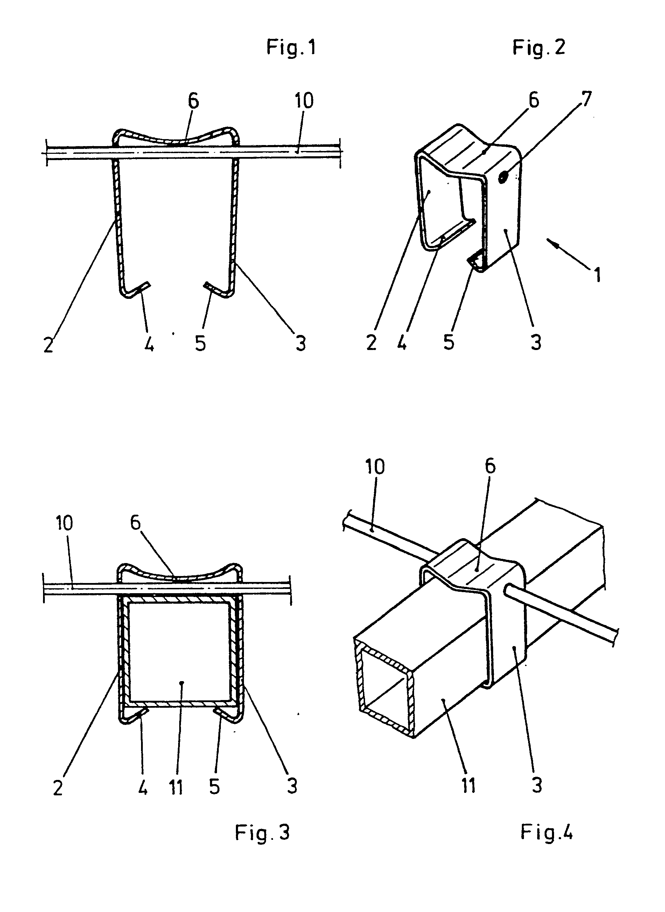

Wie in den Figuren zu erkennen ist, ist die Klammer 1 im wesentlichen U-förmig ausgebildet und hat eine Basis 6 sowie sich von dieser erstreckende Schenkel 2, 3. An den freien Enden der Schenkel 2, 3 sind nach innen gebogene und sich in Richtung auf die Basis 6 erstreckende Abschnitte 4, 5 vorgesehen. In den Schenkeln befinden sich benachbart zur Basis 6 Bohrungen, von denen lediglich die Bohrung 7 (Fig. 2) dargestellt ist. Diese Bohrungen dienen zur Aufnahme eines Reflektor- und/oder Direktorstabes und haben somit einen an dessen Abmessungen angepaßten Durchmesser. Die Basis 6 der Klammer 1 ist, wie dargestellt, etwas nach innen, d. h. zu den freien Enden der Schenkel 2, 3 hin gebogen, so daß sie eine sich parallel zu den Schenkeln erstreckende Rinne bildet. Diese Verformung könnte jedoch beispielsweise auch aus einer in einer im übrigen ebenen Basis ausgebildeten Sicke o. ä. bestehen.

Die Klammer 1 ist einstückig, beispielsweise aus Federstahl hergestellt.

Wie in Fig. 1 zu erkennen ist, dient die Klammer 1 zur Halterung eines Reflektor- und/oder Direktorstabes 10, der durch die in den Schenkeln 2, 3 vorgesehenen Bohrungen gesteckt ist, von denen in Fig. 2 lediglich die Bohrung 7 zu erkennen ist. Dieses Durchstecken kann jedoch nicht im unverformten Normalzustand der Klammer stattfinden, der in Fig. 2 gezeigt ist, weil sich der verformte Bereich der Basis 6 soweit nach innen in Richtung auf die Abschnitte 4, 5 erstreckt, daß er sich im Bereich der geradlinigen Verbindung zwischen den beiden Bohrungen befindet, also das Einführen des in eine Bohrung eingesteckten Stabes 10 in die gegenüberliegende Bohrung verhindert. Daher müssen zum Einführen des Stabes 10 die Schenkel 2, 3 um ein gewisses Stück zusammengedrückt werden, wodurch die geradlinige Verbindung der beiden Bohrungen aus dem Bereich des verformten Teils der Basis 6 herausgelangt, also der Stab 10 durch die beiden Bohrungen hindurchgesteckt werden kann. Ist der Stab 10 in die Bohrungen eingesteckt und genau bezüglich der Klammer 1 ausgerichtet, so werden die Schenkel 2, 3 wieder freigegeben und der Stab durch Anpressen an die unteren Ränder der Bohrungen und den verformten Bereich der Basis 6 in seiner Lage festgehalten (Fig. 1). In dieser Lage kann der Transport zur Montagestelle erfolgen.

Wenn die Klammer 1 an der Montagestelle auf das Antennentragprofil aufgesetzt werden soll, das im vorliegenden Fall aus einem Rechteck-Rohr 11, beispielsweise aus Aluminium, besteht, so werden die Schenkel 2, 3 auseinandergebogen, was eine noch stärkere Arretierung des Stabes 10 zur Folge hat, und die auseinandergebogenen Schenkel werden dann auf das Profil 11 aufgeschoben, bis die Abschnitte 4, 5 in der in Fig. 3 dargestellten Weise an der unteren Fläche des Profils 11 anliegen. Da dabei der Abstand zwischen der unteren Kante des Stabes 10 und den freien Enden der Abschnitte 4, 5 etwas geringer ist, als die Höhe des Profils 11 werden diese Abschnitte elastisch verformt und ziehen dadurch die Klammer 1 einschließlich des Stabes 10 nach unten gegen das Profil, um sich gleichzeitig in der unteren Fläche des Profils 11 zu verkrallen. Daher ergibt sich eine sichere und zuverlässige Verbindung zwischen Klammer 1 und Profil 11, ohne daß zusätzliche Befestigungsmittel, wie Schrauben o. ä. erforderlich wären.

**Patentansprüche**

1. Vorrichtung zur Befestigung eines Reflektor- und/oder Direktorstabes (10) an einem Antennentragprofil (11) in Form eines Vierkantstabes für Rundfunk- und/oder Fernsehantennen, für Funkantennen für den Amateurfunk sowie Yagi-Antennen, die aus einer mit an den freien Enden ihrer Schenkel nach innen gebogenen Abschnitten (4, 5) sowie mit benachbart zu ihrer Basis (6) im wesentlichen fluchtenden Bohrungen (7) zur Aufnahme des Reflektor- und/oder Direktorstabes (10) versehenen U-förmigen Klammer (1) besteht, dadurch gekennzeichnet, daß die Klammer (1) aus federelastischem Material besteht und daß die an den freien Enden der Schenkel (2, 3) nach innen gebogenen Abschnitte (4, 5) zur Basis (6) der Klammer (1) gebogen sind, so daß sie sich bei auf das Antennentragprofil (11) aufgesetzter Klammer (1) in/oder an diesem verkrallen (Fig. 3), wobei die Basis (6) der Klammer (1) einen sich im wesentlichen parallel zu den Schenkeln erstreckenden, nach innen in Richtung auf die gebogenen Abschnitte (4, 5) verformten Teilbereich aufweist bzw. derart verformt ist und sich dieser verformte Teilbereich bei unverformter Klammer (Fig. 2) zumindest in einen Teil desjenigen Bereiches erstreckt, der durch eine geradlinige Verbindung der beiden Bohrungen (7) gebildet ist, ohne sich bei um eine vorgegebene Strecke zusammengedrückten Schenkeln (2, 3) in diesen Bereich zu erstrecken.

2. Vorrichtung nach Anspruch 1, dadurch gekennzeichnet, daß der Abstand zwischen den freien Enden der gebogenen Abschnitte (4, 5) und den diesen am nächsten liegenden Rändern der Bohrungen (7) geringfügig kleiner ist, als die Höhe des Antennentragprofils (11).

3. Vorrichtung nach Anspruch 1 oder 2, dadurch gekennzeichnet, daß die Klammer (1) aus Federstahl besteht.

4. Vorrichtung nach Anspruch 3, dadurch gekennzeichnet, daß der Federstahl ein rost- und säurebeständiger Stahl ist.

**Claims**

1. A device for securing a reflector rod and/or director rod (10) to an aerial supporting section (11) in the form of a square bar for radio broadcasting and/or television aerials, for radio aerials for amateur radio as well as Yagi aerials, which consists of a U-shaped clip having portions (4, 5) bent inwards at the free ends of its arms and provided, adjacent to its base (6), with substantially aligned bores (7), to receive the reflector rod and/or director rod (10), characterised in that the clip (1) consists of springy material and that the portions (4, 5) bent inwards at the free ends of the arms (2, 3) are bent towards the base (6) of the clip (1) so that, when the clip (1) is placed on the aerial supporting section (11), they claw into or onto this (fig. 3), and the base (6) of the clip (1) comprises a portion which extends substantially parallel to the arms and is deformed inwards in the direction of the bent portions (4, 5) or is so shaped, and this deformed portion extends, when the clip is undeformed (fig. 2), at least into a part of that region which is formed by a rectilinear connection of the two bores (7) without extending into this region when the arms (2, 3) are pressed together to a predetermined extent.

2. A device as claimed in claim 1, characterised in that the spacing between the free ends of the bent portions (4, 5) and the edges of the bores (7) situated closest to these is slightly less than the height of the aerial supporting section (11).

3. A device as claimed in claim 1 or 2, characterised in that the clip (1) consists of spring steel.

4. A device as claimed in claim 3, characterised in that the spring steel is a rust-resistant and acid-resistant steel.

**Revendications**

1. Dispositif de fixation d'une barre réfléchissante et/ou directrice (10) sur un profilé porteur d'antenne (11), ledit profilé ayant la forme d'une barre quatre-pans utilisée pour porter des antennes de radio et/ou de télévision, des antennes de radio pour radio-amateurs ainsi que des antennes Yagi, se composant d'une attache en forme de U comportant des rebords recourbés vers l'intérieur (4, 5) aux extrémités libres de ses branches ainsi que des trous (7) placés essentiellement en coïncidence dans une zone adjacente à sa base (6) pour recevoir la barre réfléchissante et/ou directrice (10), caractérisé en ce que l'attache (1), réalisée en un matériau élastique, présente aux extrémités libres des branches (2, 3) des rebords (4, 5) qui sont recourbés en direction de la base (6) de ladite attache (1) de manière que, lorsque l'attache (1) est placée sur le profilé porteur d'antenne (11), ces rebords s'accrochent dans/ou sur ledit profilé, et présente une base (6) comportant une zone partielle déformée vers l'intérieur en direction des parties recourbées (4, 5), cette zone partielle étant déformée lorsque au moins jusqu'au niveau de l'alignement des deux trous (7) l'attache est libre, sans pour autant atteindre ledit niveau lorsque les branches (2, 3) sont rapprochées d'une distance prédéterminée par compression.

2. Dispositif selon la revendication 1, caractérisé en ce que l'espacement entre les extrémités libres des rebords recourbées (4, 5) et les bords de trous (7) les plus proches de celles-ci est légèrement plus faible que la hauteur du profilé porteur d'antenne (11).

3. Dispositif selon la revendication 1 ou 2, caractérisé en ce que l'attache (1) est réalisée en acier à ressort.

4. Dispositif selon la revendication 3, caractérisé en ce que l'acier à ressort est un acier inoxydable et résistant aux acides.

Fig.1

Fig. 2

Fig. 3

Fig.4